# EUROPEAN PATENT APPLICATION

(11) **EP 1 688 811 A2**
(43) Date of publication of application: **09.08.2006**
(21) Application number: 06250640.7
(22) Date of filing: 07.02.2006
(51) Int. Cl.: G05B 19/418

(54) **Networks for process control**

(30) Priority: 08.02.2005 US 650909 P
(71) Applicant: Relcom, Inc., Forest Grove, OR 97116 (US)
(72) Inventor: Graube, Maris, Forest Grove, OR 97116 (US)
(74) Representative: Haines, Miles John L.S.

(57) **Abstract**

A petrochemical process control system having a hub network for connecting a plurality of remotely located devices including sensors and actuators in the field to a control room computer. The power for operating the remote device is brought directly to the devices and not sent over a trunk cable from the control room computer. A redundant spur cable connects the control room computer to said hub. All of the spur cables between the hub and the field devices have current limiting resistors which prevent a failure or shorting of a device or spur cable devices from affecting continued operation of the other devices.

## Description

### CROSS-REFERENCE TO RELATED APPLICATION

This application claims priority under 35 U.S.C. § 119(e) to United States Provisional Application Serial No. 60/650,909 filed on February 8, 2005, the entire content of which is hereby incorporated by reference.

### Field of the Invention

This invention relates to improvements in process control systems.

### Background of the Invention

Petrochemical processing systems typically locate a number of devices in the field remote from the computer control room. Thus, sensors such as temperature and pressure gauges are mounted to processing equipment in the field. Likewise, actuators, such as valve controllers and pumps, are located in the field. These devices generally respond to digital transmission over a wired-bus system connected to one or more computers located in the control room of the petrochemical processing plant. The bus system connects the control room equipment with a twisted pair trunk cable. The field devices are connected with spur cables to the trunk by a wire terminal block in the field junction box. All of the devices are electrically parallel with the trunk cable. The cable carries power to the attached devices and a power conditioner separates the power supply from the signals on the wiring.

There are a number of problems associated with the bus configuration that can prevent it from operating and disrupt the process being controlled. For example, since the devices are connected in parallel, a short circuit in any of the devices, or in the spur cables connecting them to the trunk, short circuits the entire bus. Another point of potential failure is the power supply and associated power conditioners.

While the potential failure points can often be minimized, to do so requires additional equipment, e.g., short circuit protection circuitry at the junction box, redundant power supply and redundant power conditioner.

Yet another single point of failure is the trunk cable itself. If the trunk cable is damaged, the network's operation fails. There are no known systems available in the prior art that eliminate this single point of failure.

There are other problems associated with a bus network used for process control. Some of the devices connected to the network may be in hazardous areas that have surrounding atmospheres containing gases or vapors that can ignite or explode. Special precautions must be used in these areas. One requirement is that the power to a device in a hazardous area must be limited. Hence, the power supplied to the fieldbus network must be limited. This limits the number of devices that can be connected to the network.

There are a number of considerations that must be observed for a bus network. The trunk cable length is limited by the voltage drop that is caused by the resistance of the wires. This limitation depends on the power each device draws from the network. Spur cable lengths are typically less than 120 meters so that the signals on the network are not overly distorted. These considerations require care and expertise in designing the network.

### Summary of the Invention

A process control system utilizes a hub network to connect devices in the field to control room equipment. Embodiments include redundant spur cables so that if a spur cable connecting the control room with the remote devices is disabled, this will not disrupt communication or control of the remote devices located in its field. The power for operating the remote devices is brought directly to the devices and not sent over the wires from the control room. All of the spurs between the hub and the field instruments and actuators limit the voltage and current levels so as to be intrinsically safe within hazardous areas.

In one embodiment described, the power conditioning function of the prior art is eliminated by use of repeaters.

In one embodiment described, a short or failure in a remote device or its spur cables will not adversely affect the rest of the system operation,

In one embodiment described, the spur cables are connected to the hub by resistors which simultaneously (a) protects the hub's delivery of power to the other spur cables if a spur short circuits, (b) limits the power from the hub to the spur for Intrinsinc Safety (IS) purposes, and (c) provides series termination for the signals on the spur cable.

### Brief Description of the Drawings

Figure 1 is a schematic of an exemplary prior art local area network for process control,
Figure 2 is a schematic of one embodiment of the invention,
Figure 3 is a schematic of the hub portion of Figure 2,
Figure 4 is schematic of circuitry for providing Intrinsic Safety (IS) for hazardous areas,
Figure 5 illustrates the hub of Figures 2 and 3 provided with IS circuitry providing multiple functions.
Figure 6 illustrates an alternative IS circuit embodiment providing multiple functions.
Figure 7 illustrates another alternative IS circuit embodiment providing multiple functions.

### Detailed Description of the Preferred Embodiments

In petrochemical processing, a plant is operated in the following way: Sensors, such as temperature and pressure gauges, are located in the field with the processing equipment. There are also actuators, such a valve controllers and pumps, in the field. The sensors and the actuators communicate with each other and with computers located in the control room that operates the plant.

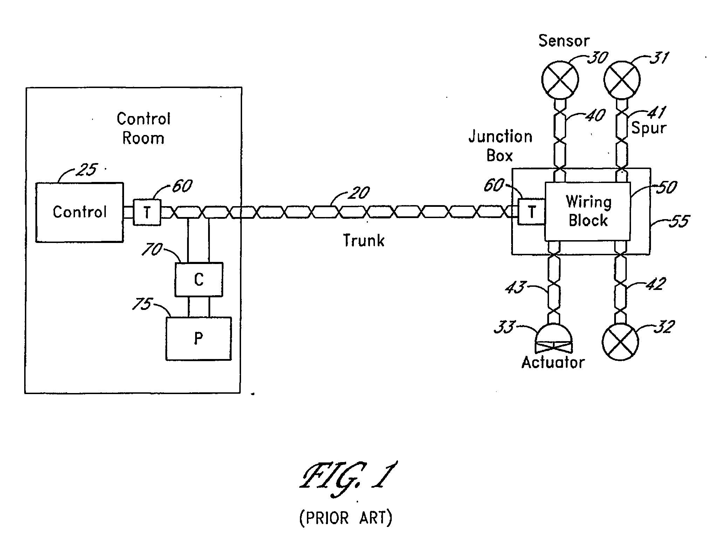

In the prior art system shown in Figure 1, the communication system and method used a standard local area network for digitally transmitting information over a pair of wires. The wires also carry power to the devices. This communications method is commonly called fieldbus and is defined in IEC standard 61158-2 and further described in the Fieldbus Wiring Guiding published by Relcom, Inc. A common fieldbus configuration is shown in Figure 1.

A twisted wire pair trunk cable 20 connects the control room equipment 25 with a number of devices 30, 31, 32 and 33 in the field. Examples of devices 30-31 include instruments for measuring temperatures or pressure and actuators such as remotely activated valves and pumps. The wires in the trunk cable 20 are typically in a shielded cable to reduce noise ingress (shield not shown). The field devices 30-33 are respectively connected with spur cables 40, 41, 42 and 43 to the trunk by a wire terminal block 50 in a field junction box. All the devices are electrically parallel with the trunk cable 20. A terminator (T) 60 is needed at each end of the trunk cable to allow the twisted pair of cable 20 to carry digital signals. Since the cable 20 carries power to the attached devices, a power conditioner (C) 70 is needed to separate a conventional constant voltage power supply (P) 75 from the signals on the wiring. This type of a network configuration is called a bus.

Fieldbus devices signal by consuming a variable amount of current from the spur cable. For example, a quiescent fieldbus device draws 20 mA current from the network. When the device signals, it draws alternately between 10 and 30 mA. Thus, the peak-to-peak signaling current is 20 mA. In the bus configuration of Figure 1, fieldbus terminators 60 are used to provide a load so that the varying signal current is turned into a voltage. The terminators 60 also terminate signal reflections at the ends of the trunk cable.

There are several disadvantages associated with the bus configuration of Figure 1 that can interrupt operation of the network and disrupt the process being controlled.

By way of specific example, since all the devices 30-33 are connected to the wires in parallel, a short circuit in any of the devices, or in the spur cables 40-43 connecting them to the trunk cable 20, short circuits the entire bus, unless an additional short circuit protection circuit is included at the junction box where the spur cable attaches to the trunk cable.

Another disadvantage of the bus configuration of Figure 1 is that failure of the power supply 75 or its associated power conditioner will result in turning off the power to all the devices on the bus. This problem can be minimized by providing redundant power supplies and redundant power conditioners such that each can supply power to the network. If there is a failure in one of them, an alarm is generated and the failed unit replaced while the other one is working.

Yet another single point of failure is the trunk cable 20 itself. If the trunk cable 20 is damaged, the network's operation fails.

There are other problems associated with a bus network used for process control. Some of the devices connected to the network may be in hazardous areas that have surrounding atmospheres containing gases or vapors that can ignite or explode. Special precautions must be used in these areas. One requirement is that the power to a device in a hazardous area must be limited. Hence, the power supplied to the fieldbus network must be limited. This limits the number of devices that can be connected to the network.

There are a number of considerations that must be observed for the prior art bus network. The trunk cable length is limited by the voltage drop that is caused by the resistance of the wires. This limitation depends on the power each device draws from the network. Spur cable lengths are typically less than 120 meters so that the signals on the network are not overly distorted. These considerations require care and expertise in designing the prior art networks.

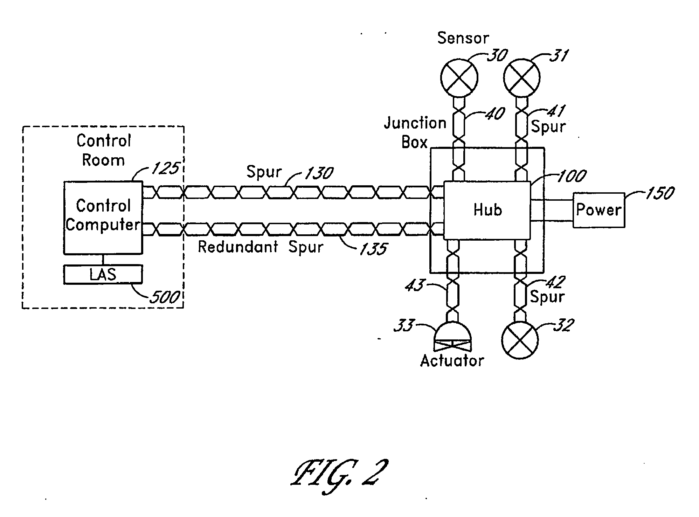

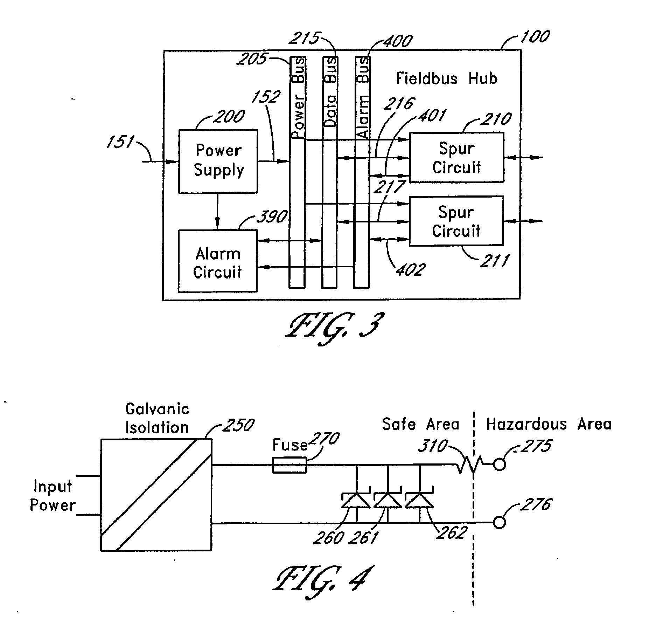

The novel process control network illustrated in Figures 2-5 does not have the disadvantages of the bus networks described above and shown in Figure 1. As shown in Figures 2 and 3, a hub network 100 is utilized and the trunk cable 20 of the prior art is eliminated. Rather, control room equipment 125 in the control room is connected by a spur cable 130 to the hub network 100. All of the devices 30, 31, 32 and 33 are also connected to the hub network 100 by the respective spurs 40, 41, 42 and 43. A particular advantage of the illustrated embodiment is that one or more redundant spurs enable redundant connections to be made between the hub network 100 and the equipment 125 in the control room. Further, as further described below, the power for operation of the 30-33 remote devices and for the hub network 100 is brought directly from a power source 150 and not sent over fieldbus wires from the control room.

The components of the hub network 100 are shown in Figure 3. The input power 151 from power source 150 is converted by its power supply 200 to a regulated DC voltage and connected as shown at 152 to an internal power bus 205. This power is used by each of the spur circuits 210, 211 that are connected between the power bus and a respective spur cable 40, 41, 42, 43, 130, 135.

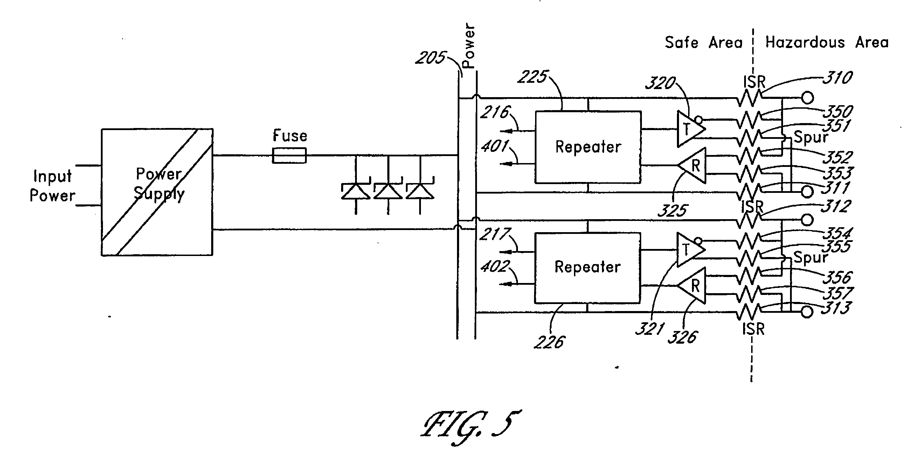

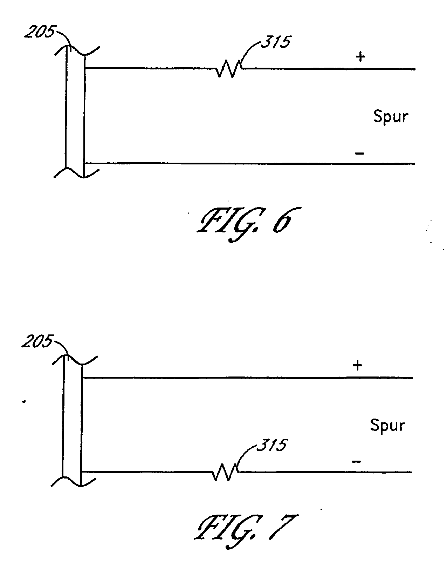

Internal to each spur circuit 210, 211 is a repeater circuit (shown in Figure 5 at 225, 226). The function of a repeater circuit is to receive a signal coming from a spur cable and put it on the internal data bus 215. All the other repeater circuits in the other spur circuits take the signal from this data bus 215 and transmit it on the spur cables to their respective devices.

While two spur circuits 210, 211 are shown, many spur circuits will typically be used in a hub 100 as needed for the number of remote devices in this field.

The hub 100 advantageously provides Intrinsic Safety (IS) protection for hazardous areas that have explosive atmospheres. The IS technique prevents the equipment used in these hazardous areas from igniting the atmosphere. IS requires that the electrical power sent into the hazardous area be limited. This is achieved by galvanically isolating the electrical power coming from non-hazardous areas and limiting the voltage and current that can be sent into the hazardous area. Galvanic isolation is further described in the Fieldbus Wiring Guide published by Relcom, Inc. These requirements are defined by international standards. Equipment used in hazardous areas is certified by various agencies to meet these requirements. Figures 4 and 5 illustrate the manner in which the IS requirements are met by the hub 100.

Referring to Figure 4, the galvanic isolation circuit 250 provides galvanic isolation and regulates its output voltage to a given DC value. Under normal conditions, the voltage is less than the breakdown voltage of the triple-redundant Zener diodes 260, 261, 262. If the voltage regulation does not work and a voltage higher than the Zener breakdown voltage is produced, a large output current results and the fuse 270 will blow. In any case, the output voltage on terminals 275, 276 to the hazardous area will never exceed a maximum value.

As described below, the ISR resistor 310 limits the current that can be drawn by equipment in the hazardous area.

The hub's power supply shown in Figure 4 provides galvanic isolation from the input power and limits the voltage sent to the spur circuits. The limited voltage is distributed on the power bus 205 to the spur circuits. The voltage from the power bus 205 passes through ISR current-limiting resistors 310, 311, 312 and 313 in each Spur circuit to its spur cable. The diagram shows a resistor on both wires of the spur cable, e.g., resistors 310, 311. This is not an IS requirement but are used for balancing the impedance to the spur cable.

The current limiting resistors enable a fail-safe system since if any of the remote devices 30, 31, 32 or 33 short circuits its associated spur cable 40, 41, 42 and 43, the current limited resistors limit the current to the faulty device and do not adversely affect operation of any of the other remotely connected devices.

Repeaters 225, 226 are respectively coupled to transmitters (T) 320, 321 that send signals to the spur and to receivers (R) 325, 326 that receive signals from the spur. These transmitters and receivers are also connected to the spur wires through resistors 350, 351, 352, 353, 354, 355, 356 and 357. Thus, in case a transmitter or receiver fails, the power to the spur is limited.

Resistors 310, 311, 312 and 313, have a dual function and eliminate the necessity of the prior art terminators 60 shown in Figure 1. Thus, in each of the hub's spur circuits, these power limiting resistors 310, 311, 312 and 313 also provide the function of a terminator: When a fieldbus device transmits, the current signal propagates over the spur cable to the current limiting resistors and is terminated. The current limiting resistors are chosen to match the characteristic impedance of the cable. When the hub's spur circuit transmits, the signal travels to the device at the end of the spur cable. Since the device has a high impedance, the signal reflects back to the spur circuit and is terminated by the current limiting resistors.

In an alternate embodiment, the resistors connecting a spur cable to the power bus 205 such as resistors 310, 311 can be combined into a single resistor used on either the positive or negative lead of the spur cable. Thus, as shown in Figure 6 in one embodiment, the negative lead of the spur cable is connected directly to bus 205 whereas the positive lead is connected through a resistor 315 having a resistance equal to the sum of the resistance of resistors 310 and 311. As shown in Figure 7, another embodiment connects the positive lead directly to the bus 205 and the negative lead is connected through resistor 315. The embodiments of Figures 5, 6, and 7 all provide for simultaneous protection of (a) the hub's power on bus 205 from short circuits on any spur, (b) limiting power from the hub to the spur for intrinsic safety (IS) purposes, and (c) provide series termination for signals on the spur cable by choosing the resistor value at, or close to, the characteristic impedance of the spur cable.

Thus, in the embodiments of Figures 2-7, the spur cables are series-terminated by the current limiting resistors which obviates the need to have dedicated terminators 60 of Figure 1 installed on the spur cables.

The hub 100 also provides a way to test the devices and spur cables. If a repeater does not receive the periodically expected signal from its spur cable, its corresponding device is either malfunctioning or the spur cable is open circuited. If the voltage at the output of the spur circuit is lower than expected, the device or the spur cable is shorted.

A circuit can be used to detect if either of the wires is shorted to the cable shield. This is not a critical error but reduces the noise immunity of the cable. These error conditions are advantageously indicated by a light on the spur circuit to aid in locating the problem. The error condition is also indicated electrically on the common alarm bus in the hub.

The hub's alarm circuit monitors the alarm bus 400 and the condition of the power supply. When the alarm circuit senses problems, it uses a standard fieldbus message to send the error condition over the network:

One device on the network is designated as the Link Active Scheduler, or LAS 500 as shown in Figure 2. One of the LAS's functions is to poll each device on the network, one at a time, by sending a Token message. When a device receives a Token addressed to it, it can use the bus to send messages on the network, including alarm messages.

The alarm circuit 390 in the hub acts as a fieldbus device. When it receives a Token, it sends its alarm status message over the network. It then sends a Return Token message that indicates that it is finished using the network. The alarm message is received by another device on the network that takes the appropriate action.

These message transactions on the network are defined in fieldbus standards.

Several of the benefits of the hub topology can be summarized as follows: There is no trunk cable that can be disabled. If any spur cable is shorted, only the device attached to that spur is affected. The rest of the network continues to function normally. Redundant spur cables can be used to connect the hub in the field with the control room equipment and eliminate a trunk power carrying cable thus eliminating a single point of failure. Power to each device is provided from the hub. This eliminates all power and bus voltage calculations that are needed for the bus topology fieldbus simplifying network design. There is no separate power conditioning circuit like that required for the bus configuration fieldbus. All spurs between the hub and devices are intrinsically safe. There is no limit to the number of IS devices that can be on the network. No explicit current limiters are needed for the spur cables. The IS resistors limit the current each spur can draw. The spurs between the hub and the fieldbus device can be long. This eliminates the spur length limitation of the bus topology fieldbus. No explicit terminators are needed. A terminator is part of the spur circuit. Data transmission between the hub and each device is point-to-point. There are no distortions associated with the trunk-and-spur arrangement of the bus topology fieldbus. The hub can include a fieldbus device to send messages about wiring errors or status of the hub.

All the devices 30, 31, 32, and 33 connected to the hub 100, including the computers in the control room, communicate with each other in the same way as they would on the prior art bus configuration network of Figure 1.

The above presents a description of the best mode contemplated for carrying out the systems and methods for networks for process control in such full, clear, concise, and exact terms as to enable any person skilled in the art to which it pertains to make and use these systems and methods. These systems and methods are, however, susceptible to modifications and alternate constructions from that discussed above that are fully equivalent. Consequently, these systems and methods are not limited to the particular embodiments disclosed. On the contrary, these systems and methods cover all modifications and alternate constructions coming within the spirit and scope of the present invention.

## Claims

1. A petrochemical process control system for connecting a plurality of remotely located devices in the field to a control room computer wherein the power used by said remote devices is independent of power delivered from a trunk cable and wherein a short circuit in a remote device or spur will not adversely affect the system, said system comprising:
a hub network remote from said control room having a power bus, data bus and alarm bus,
a first spur cable connected between said control room and said hub network, said spur cable carrying control signals between said control room and said remotely located device without delivering the electrical power used by said devices,
a second spur cable connected between said control room and said hub network, said second spur cable carrying said control signals when said first spur cable is disabled or disconnected without delivering the electrical power used by said devices,
a plurality of spur cables respectively connecting said remote devices to said hub network,
a power supply connected to said power bus of said hub network, the source of said power being independent of said first spur cable and said second spur cable, said power supply having a galvanic isolation circuit and voltage and current limiting circuitry,
said current limited circuitry comprising current limiting resistors respectively chosen to match the characteristic impedance of the respective spur cable and obviate the need of a dedicated terminator,
a plurality of repeater circuits connected between the data bus of said hub network and said plurality of spur cables to transmit and receive signals from said control room computer and said remotely connected devices,
a plurality of transmitters connected between repeater circuits and connected remote devices responsive to control signals from said control room,
a plurality of signal receivers respectively connected to repeater circuits and said plurality of remote device producing information data, and
alarm circuitry coupled to said alarm has to monitor said bus and transmit messages concerning an error condition over the data bus.

2. A spur circuit for connecting the spur cable from a remote device to a central hub network having a power bus, data bus and alarm bus, said spur circuit simultaneously providing intrinsic safety (IS) current limiting, short circuit protection and fieldbus signal termination, said spur circuit comprising
a transmitter connected to said data bus for transmitting data from said data bus to said spur cable,
a receiver connected to said data bus for receiving data from spur cable,
a power supply connected to said power bus,
one or more resistors connecting the outputs of said power bus to said spur cable,
said one or more resistors having a resistance value that matches the characteristic impedance of the spur cable so that a reflected signal back to the spur circuit is terminated, said one or more resistors also serving to limit power if said spurs is shorted.

3. A petrochemical process control system having a hub network connecting a plurality of remote devices in the field to a control room computer said hub network including
a power bus,
a data bus,
an alarm bus,
a plurality of spur cables respectively connecting said hub to said remote devices and said control room computer,
a link action scheduler (LAS) device polling each remote device by sending addressed token messages, each remote device receiving a token addressed to it adapted to respond to the network, and
alarm circuitry functioning as a remote device coupled to said alarm bus to monitor alarm signals on said alarm bus and transmit messages over the network concerning an error.

4. A petrochemical process control system for connecting a plurality of remotely located devices in the field to a control room computer comprising,
a hub network having a power bus and a data bus,
a first spur cable connected between said control room computer and said hub network, said spur cable carrying control signals between said control room and said remotely connected devices without delivering the electrical power used by said devices,
a second spur cable connected between said control room and said hub network, said second spur cable carrying said control signals when said primary cable is disabled or disconnected without delivering the electrical power used by said devices,
a power supply connected to said power bus of said hub network, the source of said power being independent of said first spur cable or said second spur cable, and
a plurality of spur cables respectively connecting said remote devices to said hub network whereby the power bus and data bus of said power for operating said remote device is brought directly from said power supply and not over the cable from said control room computers.

5. The petrochemical process control system of Claim 4, wherein said hub network further includes a plurality of repeater circuits, respectively coupled between said data bus of said hub network and said plurality of spur cable to transmit and receive signals from said room computer and said remotely connected devices.

6. The petrochemical process control system of Claim 5 comprising a plurality of signal receivers respectively connected between said repeater circuits and said plurality of remote devices producing information data.

7. The petrochemical process control system of Claim 4, wherein said power supply has a galvanic isolation circuit.

8. The petrochemical process control system of Claim 4, wherein said power supply has voltage and current limiter circuitry.

9. The petrochemical process control system of Claim 8, wherein said voltage limiter circuitry comprises Zener diodes connecting herein said power supply output terminals.

10. The petrochemical process control system of Claim 8, wherein said current limited circuitry to each spur comprises at least one current limiting resistors.

11. The petrochemical process control system of Claim 10, wherein a first resistor connects the positive lead of the spur cable and a second resistor connects the negative lead of the spur cable to said power bus.

12. The petrochemical process control system of Claim 10, wherein a resistor connects the positive lead of the spur cable to the power bus and the negative lead of the spur cable is connected directly to the power bus.

13. The petrochemical process control system of Claim 10, wherein a resistor connects the negative lead of the spur cable to the power bus and the position lead of the spur cable is connected directly to the power bus.

14. The petrochemical process control system of Claim 10, 11, 12, and 13, wherein said current limiting resistor or resistors are respectively chosen to match the characteristics impedance of the respective spur cable and obviate the need of a dedicated terminator.

15. The petrochemical process control system of Claim 4, including a link active scheduler (LAS) device polling each remote device by sending addressed token messages, each remote device receiving a token addressed to it adapted to respond to the system.

16. The petrochemical process control system of Claim 4, wherein said link network has an alarm bus.

17. The petrochemical process control system of Claim 16 comprising alarm circuitry coupled to said alarm bus, said alarm circuit functioning as a remote device to monitor alarm signals on said alarm bus and transmit messages over the network concerning an error condition.

18. The petrochemical process control system of Claim 4, wherein said spur cables are connected to said power supply through current limited circuitry so that a short in a remote devices does not prevent the other device from continuing to operate in their normal manner.

19. A method for controlling remote devices in the field from a control room computer without supplying the power consumed by said devices over the cable connected to said computer comprising:
sending said control signals over a spur cable to a hub network having a data bus and a power bus,
supplying said power bus with power independent of said spur cable, and
connecting said devices in the field by respective spur cables connected to said devices and to said power and data bus of said hub network so that said computer and said device are connected for communication on said data bus and said devices are powered by power on said power bus.

20. The method of Claim 19 comprising connecting said spur cables from said devices to said hub network by current limiting resistors chosen to match the characteristic impedance of the respective spur cable to both provide IS current limiting and obviate the need for dedicated terminators.

21. The method of Claim 19 comprising monitoring an alarm bus in said hub network and transmitting messages concerning error conditions over said data network.
